## Europäisches Patentamt

## European Patent Office

## Office européen des brevets

(11) Veröffentlichungsnummer: **0 221 228**
B1

(12) ## EUROPÄISCHE PATENTSCHRIFT

(45) Veröffentlichungstag der Patentschrift:
13.12.89

(51) Int. Cl.⁴: **H02K 41/03**, H02K 41/035

(21) Anmeldenummer: 86101546.9

(22) Anmeldetag: 06.02.86

(54) Elektrischer Antrieb.

(30) Priorität: 25.10.85 DE 3538017

(43) Veröffentlichungstag der Anmeldung:
13.05.87 Patentblatt 87/20

(45) Bekanntmachung des Hinweises auf die Patenterteilung:
13.12.89 Patentblatt 89/50

(84) Benannte Vertragsstaaten:
DE FR GB IT NL SE

(56) Entgegenhaltungen:
EP-A- 0 004 995
US-A- 3 441 819
US-A- 3 745 433
US-A- 3 869 625
US-A- 4 099 106

IBM TECHNICAL DISCLOSURE BULLETIN, Band 17,
Nr. 5, Oktober 1974, Seiten 1306,1307, New York, US;
A.M. GUZMAN et al.: "Rotary/linear motor"

(73) Patentinhaber: TA TRIUMPH-ADLER Aktiengesellschaft,
Fürther Strasse 212, D-8500 Nürnberg 80(DE)

(72) Erfinder: Schmidt, Günther, Herderstrasse 10,
D-8500 Nürnberg 90(DE)

(74) Vertreter: Rau, Manfred, Dr. Dipl.-Ing. et al, Rau &
Schneck, Patentanwälte Königstrasse 2,
D-8500 Nürnberg 1(DE)

## Beschreibung

Die Erfindung richtet sich auf einen elektrischen Antrieb nach dem Oberbegriff von Anspruch 1.

Ein Antrieb mit einem ähnlichen elektromotorischen Prinzip ist aus der DE-B 2 901 287 bekannt. Der vorbekannte Antrieb ist so ausgebildet, daß er einen im wesentlichen plattenförmigen Läufer von einer definierten Position einer Ebene zu einer anderen definierten Position dieser Ebene bewegen kann, wobei eine derart definierte Bewegung dadurch ermöglicht wird, daß ein rasterförmiges Magnetfeld vorgesehen ist und der Läufer korrespondierend zum Rasterabstand angeordnete Leiterbahnen aufweist, wobei vier Gruppen dieser Leiterbahnen selektiv über eine Steuereinrichtung mit Strom beaufschlagt werden können. Für jeden Rasterschritt ist eine Stromänderung AUS-EIN bzw. je nach der gewünschten Bewegungsrichtung eine Änderung der Stromrichtung in einer bestimmten Leitergruppe erforderlich. Ein derartiger Antrieb hat sich als Positionierantrieb in der Praxis bereits gut bewährt.

Aus der US-A 4 099 106 ist ein Antrieb bekannt, bei welchem ein Rotor in einem zylindrischen Gehäuse gelagert ist, wobei die Welle des Rotors sowohl eine Drehbewegung als auch eine Hubbewegung durchführen kann. Zur Realisierung der Hubbewegung sind rotationssymmetrische, scheibenförmige Magneten am Stator und korrespondierende Elektromagneten am Rotor vorgesehen. Die Linearbewegung wird dadurch realisiert, daß zwei unterschiedliche Elektromagneten des Stators abwechselnd von Strom durchflossen werden. Für die Erzeugung der Drehbewegung sind am Rotor beiderseits der vorstehend genannten scheibenförmigen Magneten gesonderte Magneten mit in Umfangsrichtung gesehen abwechselnder Polung vorgesehen, welche mit gesonderten Magneten des Stators in an sich bekannter Weise zur Erzeugung einer Drehbewegung zusammenwirken.

Ausgehend von einem bekannten derartigen Motor liegt der Erfindung die Aufgabe zugrunde, bei einfachem konstruktivem Aufbau und günstigen Ansteuermöglichkeiten eine beliebige Überlagerung einer Linearbewegung mit einer Drehbewegung zu ermöglichen, ohne für beide Bewegungseinrichtungen gesonderte Magneten und Ansteuerungen vorsehen zu müssen.

Diese Aufgabe wird gelöst durch den kennzeichnenden Teil von Anspruch 1.

Die Lösung gemäß Anspruch 1 betrifft einen elektrischen Antrieb, welcher sowohl eine Drehbewegung als auch eine Hubbewegung durchführen kann. Dabei ist es möglich, insbesondere die Drehbewegung in einzelnen, definierten Schritten oder als in ihrer Gesamtheit kontinuierliche Drehbewegung durchzuführen. Die Hubbewegung kann der Drehbewegung überlagert oder unabhängig von dieser durchgeführt werden, und zwar ebenfalls in definierten Schritten.

Der Erfindung liegt die wesentliche Erkenntnis zugrunde daß sich das bekannte Prinzip auch auf Drehbewegungen und Hubbewegungen übertragen läßt, wobei es dann nicht mehr erforderlich ist, daß die Schrittweite, also der Rasterabstand, in beiden Antriebsrichtungen der gleiche ist. Zudem wurde erfindungsgemäß erkannt, daß sich gerade das gemäß dem vorliegenden Prinzip ausgebildete, rasterartige Magnetfeld besonders gut zur Kombination einer Dreh- und Hubbewegung eignet, weil an der Peripherie einer Raster-Schnitt-Ebene jeweils Magnetpole gleicher Polung sind, so daß im Zusammenwirken mit einer den Bereich einer solchen Raster-Schnitt-Ebene umgebenden Leiteranordnung eine resultierende, axiale Bewegung erzielbar ist, während z.B. bei bekannten bürstenlosen Gleichstrommotoren die Permanent-Magnetpole längs einer Schnittebene jeweils alternierend gepolt sind, so daß sich bei Verwendung einer solchen Anordnung die Kräfte durch ein von umgebenden Leitern erzeugtes Magnetfeld aufheben würden, es wäre also keine axiale Bewegung bzw. Hubbewegung erzielbar.

Soweit in den Ansprüchen die Abstände von Magnetpolen bzw. Zeilen von Leiteranordnungen angesprochen werden, beziehen sich diese jeweils auf die Abstände von Mitte zu Mitte. Die Magnetpole bzw. Leiteranordnungen als solche können sich je nach Anwendungsfall überlappen.

Eine mögliche vorteilhafte Ausgestaltung gibt Anspruch 2 an. Dabei kann der Gehäusemantel entweder entsprechend Anspruch 3 oder gemäß Anspruch 4 ausgebildet sein.

Die Ausgestaltung nach Anspruch 5 weist den Vorteil auf, daß durch das teilweise Überlappen in axialer Richtung von Magneten längs verschiedener Raster-Schnittebenen insgesamt mehr wirksame Magnetpolfläche untergebracht werden kann, so daß die Hubkraft in axialer Richtung vergrößert wird. Demgegenüber muß durch eine teilweise, durch die Überlappung bedingte Magnetfeldkompensation eine Verminderung des für die Drehbewegung zur Verfügung stehenden Drehmoments in Kauf genommen werden.

Die Ausgestaltung nach Anspruch 6 macht das Vorsehen einer Vielzahl an dem Rotor zu befestigender Einzelmagneten entbehrlich, da lediglich ein einziger, axial magnetisierter Magnet verwendet zu werden braucht. Die Rasterausbildung des Magnetfelds wird durch die Zahnung der Flußleitscheiben erreicht, wobei lediglich an den Stirnseiten der Zähne ein effektives Magnetfeld vorhanden ist. Da die Flußleitscheiben als Stanzteile ausgeführt werden können, ist diese Ausführungsform besonders kostengünstig herstellbar bzw. montierbar. Demgegenüber muß eine etwas erhöhte magnetische Streuung in Kauf genommen werden.

Anspruch 7 gibt den einfachsten, unkompliziertesten Fall für die Realisierung einer axialen Bewegung an. In diesem Fall sind nämlich nur zwei Leitergruppen vorgesehen, welche mit lediglich zwei magnetisch wirksamen Scheibenabschnitten des Rotors zur Erzeugung einer Axialbewegung zusammenwirken. In der Regel setzt sich selbstverständlich jede Leitergruppe aus einer Mehrzahl parallel zueinander und/oder übereinander gewickelter Leiter zusammen. In diesem Fall ist eine axiale Positionierung mangels einer durch ein weiter ausgedehntes Rasterfeld vorgegebenen Gleichgewichtsstellung nur mit verhältnismäßig großem Aufwand realisierbar, so daß für die axiale Bewegung Anschläge erforderlich sind.

Eine elektronische Positionierung kann dadurch realisiert werden, daß die einzelnen Leiter der beiden Leitergruppen in axialer Richtung unterschiedlich gewichtet mit Strom versorgt werden, d.h. es wird z.B. ein "Schwerpunkt" in der Verteilung des erzeugten magnetischen Feldes und damit eine Gleichgewichtslage erzielt.

Die Ausführungsform nach Anspruch 8 weist den Vorteil auf, daß die elektrischen Verluste geringer sind, da die Radialwicklung kürzer gehalten werden kann, und daß darüber hinaus auch bei vorgesehenen hohen Arbeitsgeschwindigkeiten kostengünstiges Material, wie z.B. Baustahl, verwendet werden kann. Demgegenüber müssen die Flußleitscheiben des Rotors in axialer Richtung größer dimensioniert werden, was eine Erhöhung des Trägheitsmoments bedingt. Vorzugsweise werden dabei Materialien verwendet, welche die Entstehung von Wirbelströmen möglichst unterbinden.

Anspruch 9 gibt eine Ausgestaltung für Anwendungsfälle an, wo es erforderlich ist, daß ein äußeres Antriebsteil um eine feststehende innere Welle rotiert bzw. relativ zu dieser axial verlagerbar ist.

Die Variante nach Anspruch 10 eignet sich insbesondere dann, wenn ein Kunststoffgehäuse verwendet werden soll, wenn also der Gehäusemantel als solcher magnetisch nicht wirksam ist.

Weitere Vorteile und Einzelheiten der Erfindung ergeben sich aus der folgenden Beschreibung einer bevorzugten Ausführungsform anhand der Zeichnung.

Dabei zeigen:

Fig. 1a bis f eine schematische Darstellung der Relativlage von rasterförmigem Magnetfeld und der Leiteranordnungen in verschiedenen Positionen zur Erläuterung des verwendeten Grundprinzips,

Fig. 2a eine Aufwicklung, welche den Verlauf der ersten Leiteranordnung zeigt,

Fig. 2b einen Schnitt durch die Aufwicklung nach Fig. 2a,

Fig. 3 einen schematisierten Längsschnitt durch eine erste Ausführungsform des erfindungsgemäßen Antriebs,

Fig. 4 einen Schnitt längs der Linie IV-IV in Fig. 3,

Fig. 5 einen Fig. 3 entsprechenden Schnitt durch eine zweite Ausführungsform,

Fig. 6 einen Schnitt längs der Linie VI-VI in Fig. 5,

Fig. 7 einen Fig. 3 entsprechenden Schnitt einer dritten Ausführungsform,

Fig. 8 einen Fig. 3 entsprechenden Schnitt einer vierten Ausführungsform und

Fig. 9 eine Variante der Ausführungsform nach Fig. 8.

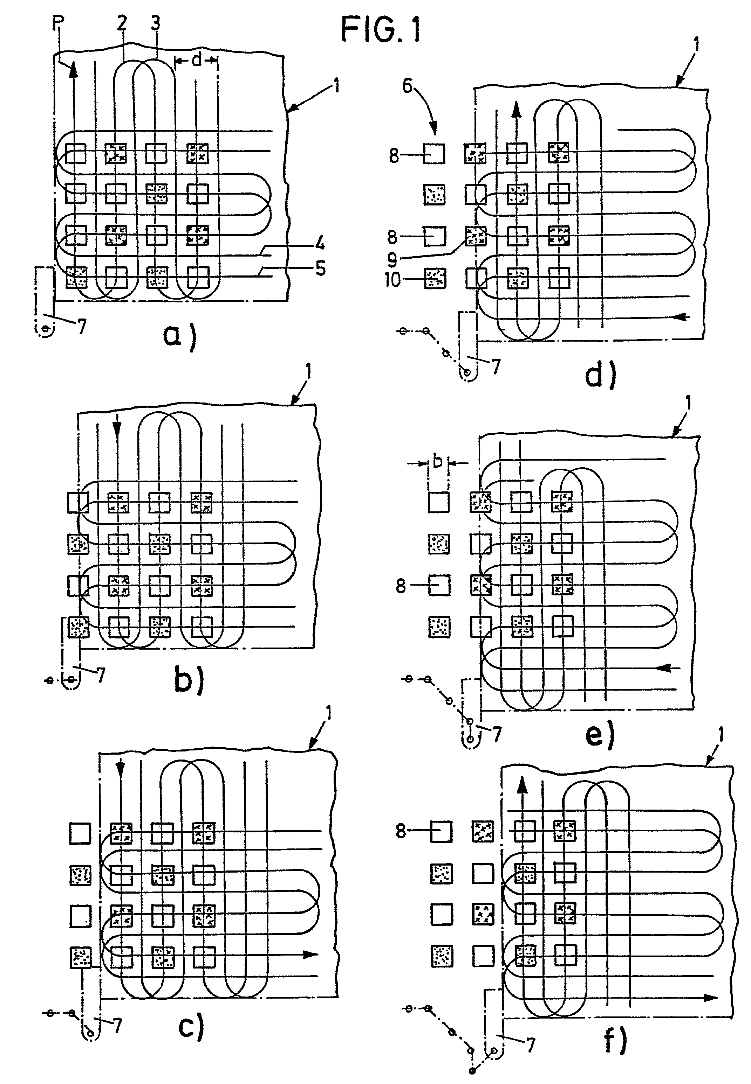

In Fig. 1 ist zur Veranschaulichung des dem erfindungsgemäßen Antrieb zugrundeliegenden Prinzips eine Aufwicklung des ersten Antriebsteils 1 dargestellt, welche die Leiteranordnungen 2, 3 bzw. 4, 5 trägt, welche senkrecht zueinander verlaufen. Die Leiteranordnungen 2 bzw. 3 bzw. 4 bzw. 5 bilden jeweils eine Gruppe von elektromagnetisch wirksamen Leiterabschnitten.

Das zweite Antriebsteil 6 ist im einzelnen nicht dargestellt. Es trägt die das dargestellte rasterförmige Magnetfeld erzeugenden Magneten. Wie die Entstehung eines derartigen Magnetfelds vorstellbar ist, wird im einzelnen im deutschen Patent 2 901 287 beschrieben. Die Punkte bzw. Kreuze in den Rasterfeldern geben die Richtung des Magnetfelds an. Auch dieses Magnetfeld ist als ebene Aufwicklung dargestellt. Zur Verdeutlichung der erzielten Bewegung ist bei 7 ein fiktiver Schreiber dargestellt.

Der Stromzustand der einzelnen Leiteranordnungen ist durch Pfeile P dargestellt, wobei das Vorhandensein eines Pfeils P bedeutet, daß die jeweilige Gruppe von Leiteranordnungen von einem Stromimpuls zur Durchführung der jeweiligen durch den Schreiber 7 veranschaulichten Bewegung mit Strom beaufschlagt ist, wobei die Richtung des Pfeils gleichzeitig auch noch die Richtung des Stromimpulses angibt.

Die nichtausgefüllten Bereiche 8 sind relativ feldfreie Bereiche. Die bei den Magnetpolen 9, 1o angegebene Richtung weist in die Zeichenebene hinein bzw. aus der Zeichenebene heraus.

Die Bewegungsrichtung des beweglichen Antriebsteils 1 ergibt sich jeweils als Summe der Kraftwirkungen in horizontale bzw. vertikale Richtung gemäß der Lorenz-Regel.

Durch jeden Stromimpuls wird eine Fortbewegung um die Breite b eines Rasterbereichs erzielt, wobei die Endposition definiert ist und eine Weiterbewegung über diese Endposition hinaus dadurch vermieden wird, daß dann die nächste parallele Leiteranordnung, z.B. 2, der gleichen strombeaufschlagten Untergruppe Magnetfeldbereiche 10 überdecken würde, die eine andere Orientierung aufweisen als diejenigen, die zur ursprünglichen Bewegung mitwirkten, was aber nach der Lorenz-Regel unmittelbar eine der ursprünglichen Kraft entgegengesetzt gerichtete Kraft zur Folge hat. Zur Fortsetzung der Bewegung in die gleiche Richtung um einen weiteren Schritt müssen also die Leiteranordnungen, z.B. 3, der jeweils anderen Untergruppe einen Stromimpuls in die entgegengesetzte Richtung wie der vorhergehende erhalten. Die beiden Untergruppen von zueinander parallelen Leiteranordnungen erhalten also für die Bewegung längs einer Koordinatenachse abwechselnd Stromimpulse, wobei durch die Stromrichtung dieser Impulse die Bewegungsrichtung bestimmt wird. Dies ist in Fig. 1 anhand der Positionen a bis f veranschaulicht.

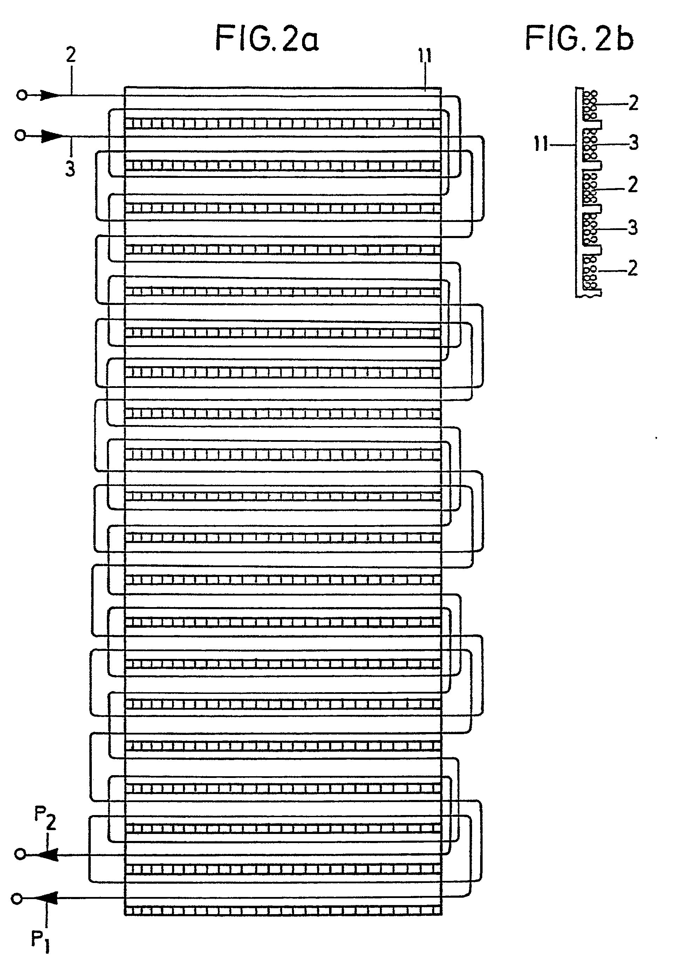

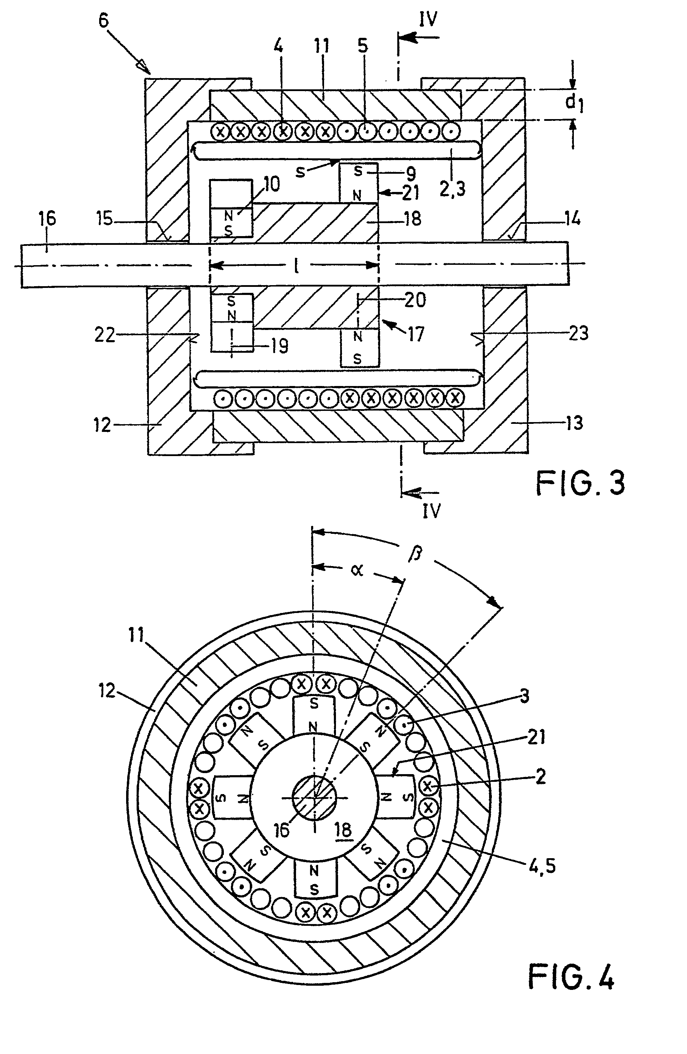

Fig. 2a zeigt eine Aufwicklung des die Leiter tragenden Gehäusemantels 11. In Fig. 2 sind lediglich die beiden Gruppen 2, 3 längsverlaufender Leiteranordnungen dargestellt, während die Gruppen 4, 5 radial umlaufender Leiteranordnungen lediglich in Fig. 3 sichtbar sind.

In Fig. 3 ist die Richtung des Stromflusses durch Punkte bzw. Kreuze bei den Leiteranordnungen der Gruppe 4, 5 veranschaulicht, während in Fig. 2 durch Pfeile P1 bzw. P2 die Richtung des Stromflusses dargestellt ist. Gegenüber der allgemeinen Darstellung in Fig. 1 sind bei dem Ausführungsbeispiel gemäß Fig. 2 und 3 die Leiter also an dem feststehenden Antriebsteil 6 (Stator), welches durch das Gehäuse gebildet wird, angeordnet.

Aus Fig. 2 wird deutlich, daß die Leitergruppen 2 bis 3 praktisch zwei gegeneinander um einen Rasterabstand b versetzte Mäanderanordnungen bilden. In Fig. 2a ist lediglich schematisch der Verlauf der Leiter dargestellt. Die teilweise Schnittdarstellung in Fig. 2b zeigt, daß tatsächlich jede einzelne Leitergruppe 2 bzw. 3 durch eine Vielzahl parallellaufender Leiter gebildet wird.

Wie sich aus Fig. 3 ergibt, umfaßt das Gehäuse zwei als stirnseitige Abdeckung dienende Gehäusedeckel 12, 13, welche z.B. aus Kunststoff ausgebildet sein können.

Diese Gehäusedeckel schließen den Gehäusemantel 11 aus magnetisierbarem Material, der als Joch dient. Mit dem Mantel 11 verbunden sind die Leiteranordnungen 4, 5 sowie 2, 3, welche schematisch im Schnitt in Fig. 4 dargestellt sind.

Die Gehäusedeckel 12, 13 weisen im einzelnen nicht dargestellte Lager 14, 15 für eine Rotorwelle 16 auf, welche einen Rotor 17 trägt, der mit einem Spiel s im Inneren der Leiteranordnungen 2, 3 über die Welle 16 drehbar gelagert ist.

Der Rotor 17 umfaßt eine auf der Welle 16 befestigte Flußleitbuchse 18, an welcher im Ausführungsbeispiel längs zweier Raster-Schnitt-Ebenen 19, 2o eine Mehrzahl von Permanentmagneten 21 mit Polen 9 bzw. 1o angeordnet ist.

Wie insbesondere aus Fig. 4 ersichtlich ist, sind die Magnete 21 der beiden Schnitt-Ebenen 19 bzw. 2o gegeneinander auf Lücke versetzt. In einer praktischen Ausführung können sich diese versetzten Magnete 21 teilweise überlappen, was aber in Fig. 4 der Übersichtlichkeit halber nicht dargestellt ist.

Die Drehbewegung erfolgt im Zusammenwirken zwischen den Magneten 21 und den Leiteranordnungen der Gruppen 2, 3 nach dem im Zusammenhang mit Fig. 1 beschriebenen Prinzip. Die Axialbewegung erfolgt im Zusammenwirken der Magneten 21 mit den Leiteranordnungen 4, 5. Als Anschlag für die Axialbewegung dienen die Innenseiten 22, 23 der Gehäusedeckel 12, 13.

Der Gehäusemantel 11 dient dabei als magnetischer Rückschluß und Abschirmungsteil. Seine Dicke d muß so gewählt werden, daß das magnetisierbare Material nicht in der Sättigung betrieben wird. Für hohe Arbeitsgeschwindigkeiten wird deshalb vorzugsweise ein elektrisch schlecht leitendes und deshalb wirbelstromarmes Material (Handelsbezeichnung Corovac) verwendet. Bei mittleren Geschwindigkeiten genügt ein Material, wie z.B. Sintereisen, oder ein geblechter Rückfluß. Bei langsamen Systemen reicht geglühter Baustahl (z.B. St 37).

Die Leiteranordnungen 4, 5 können galvanisch getrennt oder hintereinander angeschlossen betrieben werden. Bei Hintereinanderschaltung wird lediglich ein Brückentreiber, d.h. eine elektronische Umpolanordnung, benötigt. Durch Änderung der Polung bewegt sich der Rotor 17 entweder in Richtung auf die Innenseite 22 oder auf die Innenseite 23.

Die Ansteueranordnung für die Leiteranordnungen 2, 3 und 4, 5 kann entsprechend einer für solche Anwendungsfälle bekannten Anordnung ausgebildet sein (vgl. z.B. Zeitschrift "ELEKTRONIK", Heft 4/7o, Seite 5).

Zur Erzeugung einer kontinuierlichen, rotierenden Bewegung des Rotors 17 sind grundsätzlich zwei galvanisch voneinander getrennte Phasen 2, 3 mit je einem Brückentreiber erforderlich. Die durch die Magnete 21 vorgegebene Polteilung kann je nach Anwendung unterschiedlich gewählt werden. Jedoch sollte die Polbreite möglichst nicht kleiner sein als der Luftspalt, d.h. je größer der Ankerdurchmesser ist, umso kleinere Schrittwinkel sind realisierbar. Der in Fig. 4 dargestellte Schrittwinkel $\alpha$ entspricht der Hälfte der Polteilung $\beta$.

Die Leiteranordnungen 2, 3 bzw. 4, 5 können durch Ätzung ausgebildet werden, frei oder auf einem Träger gewickelt sein. In der Regel werden sie fest mit dem Gehäuse verpreßt oder verklebt.

Die Flußleitbuchse 18 kann z.B. aus geblühtem Baustahl (St 37) ausgeführt sein. Die Länge 1 der Flußleitbuchse 18 wird von dem gewünschten Axialhub und der Polbreite in axialer Richtung bestimmt.

Die Welle 16 ist aus nichtmagnetisierbarem Material hergestellt. Die verwendeten Permanentmagnete 21 werden je nach Anwendungsfall ausgewählt. Auch die Gehäusedeckel 12, 13 sind aus unmagnetischem Material hergestellt. Sofern in diesen Deckeln 12, 13 keine gesonderten Lagerbuchsen 14, 15 vorgesehen werden, können die Deckel z.B. aus Polytetrafluoräthylen hergestellt sein.

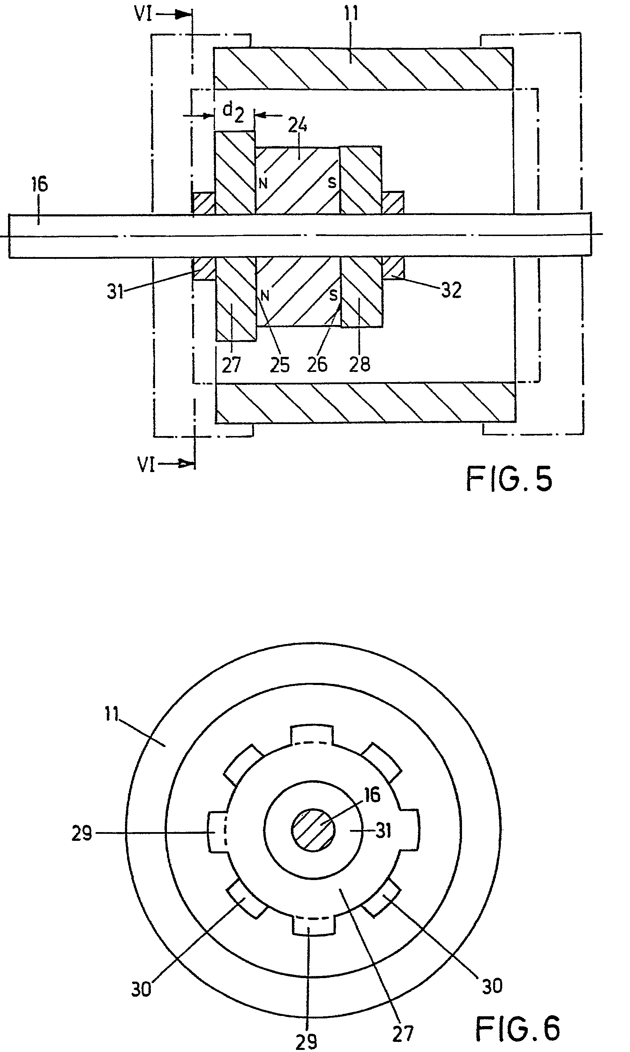

Bei der in Fig. 5 und 6 dargestellten Ausführungsform ist statt einer Mehrzahl am Außenmantel einer Flußleitbuchse 18 angeordneter Permanentmagneten 21, welche bei der Ausführungsform gemäß Fig. 3 und 4 in radialer Richtung magnetisiert sind, ein einziger, axial durchbohrter Magnet 24 vorgesehen, welcher in axialer Richtung magnetisiert ist. Auf die Stirnseiten 25, 26, also auf die Polseiten, ist je eine Flußleitscheibe 27 bzw. 28 aufgesetzt, wobei der Außenrand der Flußleitscheiben 27, 28, wie aus Fig. 6 ersichtlich, mit Zähnen 29 versehen ist, wobei die Zähne 29 der Flußleitscheibe 27 gegen korrespondierende Zähne 3o der Flußleitscheibe 28 entsprechend versetzt sind, wie die Permanentmagneten 21 bei der Ausführungsform nach Fig. 3. Im Zusammenwirken mit dem gehäuseseitigen Mantel 11, welcher als Joch wirkt, wird bei dieser Gestaltung ein ähnliches Magnetfeld erzielt wie bei der Ausführungsform nach Fig. 1, wobei unter Inkaufnahme einer etwas größeren magnetischen Streuung eine kostengünstigere Herstellung und Montage erzielt wird.

Die Dicke $d_2$ der Flußleitscheiben 27, 28 wird so bemessen, daß diese unterhalb der Sättigung betrieben werden.

In Fig. 5 ist schematisch eine einfache Montagemöglichkeit mit Hilfe aufgesetzter Muttern 31, 32 dargestellt.

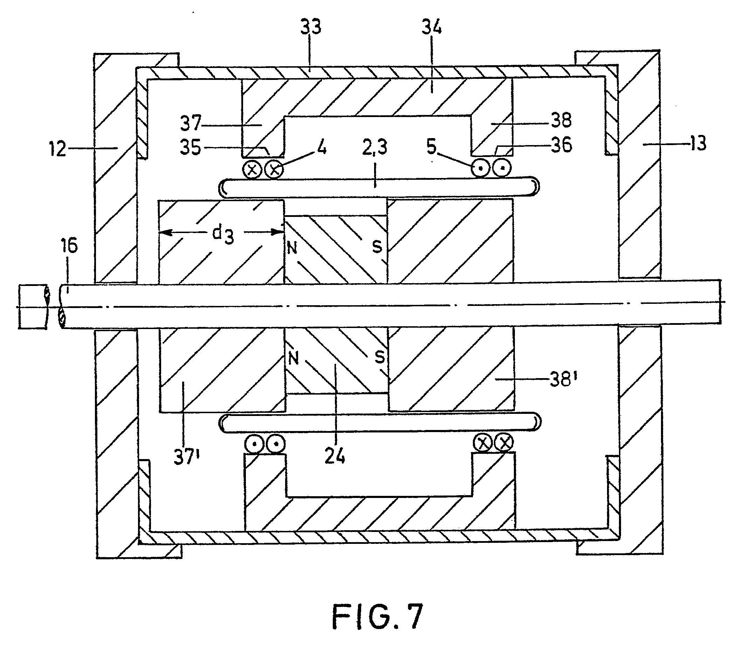

Bei der Ausführungsform nach Fig. 7 ist statt eines massiven Gehäusemantels 11 zwischen den Gehäusedeckeln 12 und 13 eine als Gehäusemantel wirkende Abschirmung 33 vorgesehen, an welcher ein U-förmiges Rückschlußteil 34 befestigt ist. An den Stirnseiten 35 bzw. 36 der U-Schenkel 37 bzw. 38 sind die Leiteranordnungen 4 bzw. 5 angeordnet, welche in diesem Fall eine relativ geringe axiale Erstreckung aufweisen. Um trotzdem zwischen den Leiteranordnungen 4, 5 und den den axial magnetisierten Magneten 24 umgebenden Flußleitscheiben 37', 38' über den gesamten axialen Hub eine Wechselwirkung sicherzustellen, müssen die Flußleitscheiben 37', 38' eine relativ große axiale Länge $d_3$ aufweisen.

Durch diese Ausgestaltung werden die elektrischen Verluste in den Leiteranordnungen 4, 5 und auch 2, 3 vermindert, da diese verkürzt werden können, und es kann auch bei hoher Arbeitsgeschwindigkeit als magnetisierbares Material z.B. Baustahl verwendet werden. Allerdings muß andererseits für die Flußleitscheiben 37', 38' ein Magnetmaterial mit geringer elektrischer Leitfähigkeit verwendet werden, um Wirbelstrome zu unterbinden. Darüberhinaus wird die Masse des Rotors hierdurch vergrößert und damit auch dessen Trägheitsmoment.

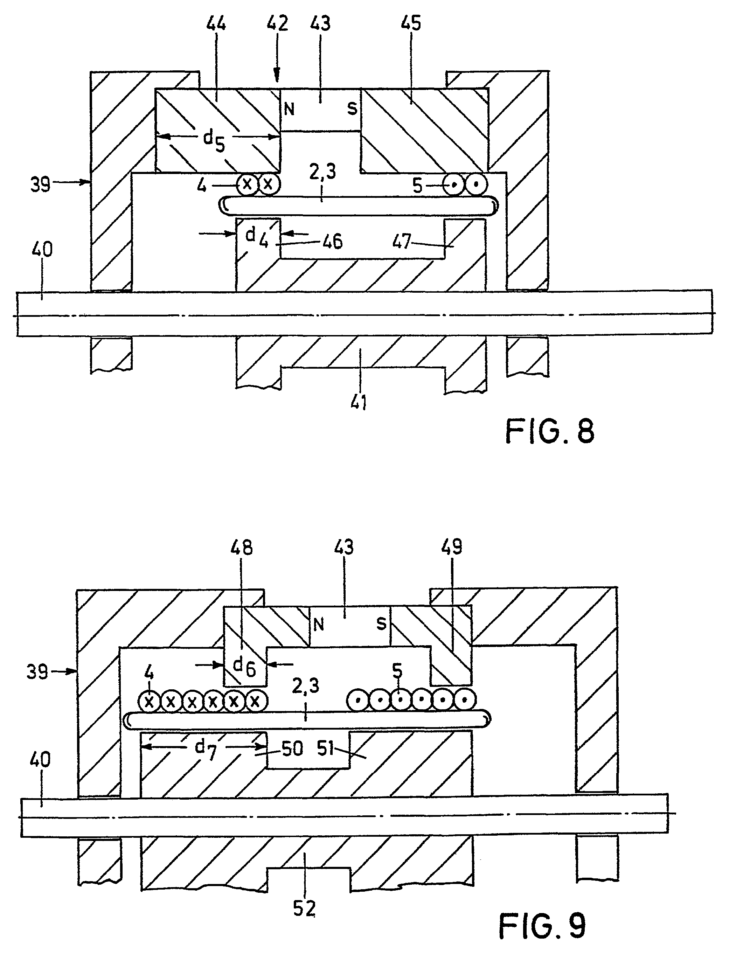

Bei der in Fig. 8 und 9 dargestellten Ausführungsform ist das Gehäuse 39 als um die ortsfeste Welle 4o drehbar ausgebildet. Mit der Welle 40 drehfest verbunden ist ein im Querschnitt doppel-U-förmiges Rückschlußteil 41 und die Wicklungen 2, 3 bzw. 4, 5. Der Gehäusemantel 42 umfaßt einen in axialer Richtung magnetisierten Permanentmagnetring 43, welcher beidseitig von Flußleitbuchsen 44 bzw. 45 umgeben ist.

Die Varianten dieser Ausführungsform gemäß Fig. 8 einerseits und Fig. 9 andererseits unterscheiden sich dadurch, daß bei der Variante nach Fig. 8 die Flußleitbuchsen 44, 45 eine relativ große axiale Länge $d_5$ aufweisen, wobei während die U-Schenkel 46, 47 des Rückschlußteils 41 eine relativ geringe axiale Länge $d_4$ aufweisen, während demgegenüber bei der Variante nach Fig. 9 die Flußleitbuchsen 48, 49 eine relativ geringe axiale Länge $d_6$ aufweisen, während andererseits die U-Schenkel 5o, 51 des Rückschlußteils 52 eine relativ große axiale Erstreckung $d_7$ aufweisen. Je nachdem, ob ein besonders kleines Trägheitsmoment des sich drehenden Gehäuses 39 von Bedeutung ist oder nicht, wird eine der beiden Ausführungsformen bevorzugt.

Bei einer in der Zeichnung nicht dargestellten Ausführungsform als rein drehende Konstruktion ohne das gleichzeitige Vorsehen einer Hubbewegung kann eine Konstruktion z.B. gemäß Fig. 3 gewählt werden, wobei dann aber die Leiteranordnungen 4, 5 entfallen und der Rotor 17 ohne axiales Spiel in dem Gehäuse 12 angeordnet ist.

**Patentansprüche**

1. Elektrischer Antrieb umfassend einen Permanentmagnete tragenden Rotor (17) und einen Leiterwicklungen tragenden, den Rotor (17) umgebenden und diesen lagernden Stator (6), wobei über eine Steuereinrichtung die Leiterwicklungen wechselweise erregbar sind und die an dem Rotor (17) angeordneten Permanentmagneten ein rasterförmiges Magnetfeld derart erzeugen, daß in tangentialer Richtung benachbarte Magnetpole (9, 10) gleiche, diagonal dazu benachbarte Magnetpole (9, 10) jedoch ungleiche Magnetisierung aufweisen, und wobei die Leiterwicklungen zwei Leitergruppen (2 bzw. 3, 4 bzw. 5) umfassen, deren Leiter eine Anzahl paralleler Zeilen bilden, dadurch gekennzeichnet, daß die Leiterwicklungen zwei zueinander senkrecht verlaufende Leiteranordnungen (2, 3 bzw. 4, 5) umfassen, daß die Zeilen jeder Leiteranordnung (2, 3 bzw. 4, 5) in gleichem Abstand b angeordnet sind, daß die Stromrichtungen in der n-ten bzw. (n + 2)ten Zeile und in der (n + 1)ten bzw. (n + 3)ten Zeile jeweils entgegengesetzt sind, und daß die Permanentmagneten an dem Rotor (17) so verteilt sind, daß axial benachbarte Zeilen jeweils den gleichen Abstand b aufweisen.

2. Antrieb nach Anspruch 1, dadurch gekennzeichnet, daß ein Gehäuse (Gehäusemantel 11) die Leiteranordnungen (2, 3, 4, 5) trägt, und daß der Rotor (17) eine Mehrzahl von radial magnetisierten Permanentmagneten (21) zur Erzeugung des rasterförmigen Magnetfelds aufweist.

3. Antrieb nach Anspruch 2, dadurch gekennzeichnet, daß der Gehäusemantel (11) aus magnetisierbarem Material ausgebildet ist und gegenüber den Magneten (21) des Rotors (17) als Joch wirkt.

4. Antrieb nach Anspruch 2, dadurch gekennzeichnet, daß auch das Gehäuse eine zu den Magneten des Rotors korrespondierende Zahl von radial magnetisierten Permanentmagneten trägt.

5. Antrieb nach Anspruch 3 oder 4, dadurch gekennzeichnet, daß die Magneten (21) einer Raster-Schnittebene gegen die der nächsten Raster-Schnittebene versetzt, aber sich teilweise überlappend angeordnet sind.

6. Antrieb nach einem der Ansprüche 1 bis 5, dadurch gekennzeichnet, daß der Rotor (17) einen in axialer Richtung magnetisierten Magneten (24) aufweist, und daß auf die Stirnseiten (25, 26) des Magneten (24) Flußleitscheiben (27, 28) aufgesetzt sind, welche längs ihrer Peripherie eine Zahnung (Zähne 29, 30) entsprechend der Rasterweite des zu erzeugenden Magnetfeldes aufweisen.

7. Antrieb nach einem der Ansprüche 1 bis 6, dadurch gekennzeichnet, daß die Stirnwände (22, 23) des Gehäuses (Gehäusedeckel 12, 13) einen Anschlag für die axiale Bewegung des Rotors aufweisen bzw. bilden, und daß die beiden Leitergruppen, welche tangential zum Rotor (17) verlaufen, jeweils nur eine Raster-Einheit (b) umfassen.

8. Antrieb nach einem der Ansprüche 1 bis 7, dadurch gekennzeichnet, daß die tangential zum Rotor verlaufenden Leiteranordnungen (4, 5) auf die Stirnseiten (35, 36) der U-Schenkel (37, 38) eines im Querschnitt U-förmigen Wicklungsträgers (34) aus magnetisierbarem Material aufgebracht sind.

9. Antrieb nach einem der Ansprüche 1 bis 8, dadurch gekennzeichnet, daß ein inneres, zylinderförmiges Antriebsteil (Rückschlußteil 41) mit einer Welle (40) fest verbunden ist und feststeht sowie die Leiteranordnungen (2, 3, 4, 5) trägt, und daß ein dieses umgebendes, einen Permanentmagneten (43) tragendes, zylinderförmiges zweites Antriebsteil (Gehäuse 39) auf der Welle drehbar gelagert ist.

10. Antrieb nach Anspruch 9, dadurch gekennzeichnet, daß das äußere Antriebsteil (Gehäuse 39) zwei ringförmige, den Permanentmagneten (43) einschließende Flußleitscheiben (44, 45 bzw. 48, 49) aufweist.

## Claims

1. Electric drive comprising a rotor (17) bearing permanent magnets and a stator (6) which carries conductor windings and which surrounds and supports the rotor (17), the conductor windings being alternately excitable by way of a control unit and the permanent magnets which are arranged on the rotor (17) generating a grid-shaped magnetic field in such a manner that tangentially adjacent magnetic poles (9, 10) have like magnetization, but magnetic poles (9, 10) diagonally adjacent thereto have unlike magnetization, and the conductor windings comprising two conductor assemblies (2 or 3, 4 or 5), the conductors of which form a number of parallel rows, characterized in that the conductor windings comprise two conductor arrangements (2, 3 or 4, 5) running perpendicular to one another, that the rows of each conductor arrangement (2, 3 or 4, 5) are arranged with an equal spacing b, that the polarity directions are opposite in the n th or (n+ 2) row and in the (n+1) or (n+3) row, and that the permanent magnets on the rotor (17) are distributed in such a manner that axially adjacent rows each have the same spacing b.

2. Drive according to Claim 1, characterized in that a housing (housing wall 11) carries the conductor arrangements (2, 3, 4, 5), and that the rotor (17) has a plurality of radially magnetized permanent magnets (21) to generate the grid-shaped magnetic field.

3. Drive according to Claim 2, characterized in that the housing wall (11) is formed from magnetizable material and acts as a yoke opposite the magnets (21) of the rotor (17).

4. Drive according to Claim 2, characterized in that the housing also carries a number of radially magnetized permanent magnets, which number corresponds to the number of magnets of the rotor.

5. Drive according to Claim 3 or 4, characterized in that the magnets (21) of one grid cutting plane are staggered relative to the magnets of the next grid cutting plane, but are arranged partially overlapping one another.

6. Drive according to any one of Claims 1 to 5, characterized in that the rotor (17) has an axially magnetized magnet (24), and that flux conducting plates (27, 28) are fitted on the ends (25, 26) of the magnet (24), which plates have along their periphery a toothing (teeth 29, 30) corresponding to the grid width of the magnetic field to be produced.

7. Drive according to any one of Claims 1 to 6, characterized in that the end walls (22, 23) of the housing (housing covers 12, 13) have or form a stop for the axial movement of the rotor, and that the two conductor assemblies running tangentially to the rotor (17) each comprise only one grid unit (b).

8. Drive according to any one of Claims 1 to 7, characterized in that the conductor arrangements (4, 5) running tangentially to the rotor are mounted on the ends (35, 36) of the legs (37, 38) of a winding carrier (34) which is U-shaped in cross-section and made of magnetizable material.

9. Drive according to anyone of Claims 1 to 8, characterized in that an inner cylindrical driving element (yoke element 41) is rigidly connected to a shaft (40) and is stationary and also carries the conductor arrangements (2, 3, 4, 5), and that a cylindrical second driving element (housing 39) which surrounds this driving element and carries a permanent magnet (43) is rotatably mounted on the shaft.

10. Drive according to Claim 9, characterized in that the outer driving element (housing 39) has two ring-shaped flux conducting plates (44, 45 or 48, 49) which enclose the permanent magnet (43).

## Revendications

1. Entraînement électrique comprenant un rotor (17) portant des aimants permanents et un stator (6) portant des enroulements conducteurs, entourant le rotor (17) et logeant ce dernier, les enroulements conducteurs pouvant, grâce à un dispositif de commande, être levés en alternance, et les éléments permanents disposés sur le rotor (17) créant un champ magnétique en forme de réseau de telle façon que les pôles magnétiques (9, 10) voisins en direction tangentielle présentent des pôles magnétiques (9, 10) voisins diagonalement à ceux-ci, mais de magnétisation différente, et les enroulement conducteurs comportant deux groupes de conducteurs (2 ou 3, 4 ou 5) dont les conducteurs constituent un certain nombre de lignes parallèles, caractérisé en ce que les enroulements conducteurs comprennent deux dispositions de conducteurs (2, 3 ou 4, 5) de tracés perpendiculaires l'une à l'autre, en ce que les lignes de chaque disposition de conducteur (2, 3 ou 4, 5) sont disposées à même distance b, ce que les directions de courant dans les n-ièmes et les (n + 2)-ièmes lignes et dans les (n + 1)-ièmes ou les (n + 3)-ièmes lignes sont opposés, et en ce que les aimants permanents du rotor (17) sont répartis de telle façon que des lignes voisines axialement présentent respectivement la même distance b.

2. Entraînement selon la revendication 1, caractérisé en ce qu'un boîtier (enveloppe de boîtier 11) porte la disposition de conducteurs (2, 3, 4, 5), et en ce que le rotor (17) présente plusieurs éléments permanents (21) magnétisés radialement pour créer le champ magnétique en forme de réseau.

3. Entraînement selon la revendication 2, caractérisé en ce que l'enveloppe de boîtier (11) est constituée de matière susceptible d'être magnétisée, et agit comme étrier par rapport aux aimants (21) du rotor (17).

4. Entraînement selon la revendication 2, caractérisé ce que le boîtier également porte un nombre d'aimants permanents magnétisés radialement correspondant aux aimants du rotor.

5. Entraînement selon la revendication 3 ou 4, caractérisé en ce que les aimants (21) d'un plan de coupe de réseau sont décalés par rapport au plan de coupe de réseau voisin, mais sont disposés en se recouvrant partiellement.

6. Entraînement selon l'une des revendications 1 à 5, caractérisé en ce que le rotor (17) présente un aimant (24) magnétisé en direction axiale, et en ce que, sur les faces frontales (25, 26) de l'aimant (24), sont disposés des disques conducteurs de flux (27, 28), qui présentent le long de leur périphérie une denture (dent 29, 30) correspondant à la largeur du réseau du champ magnétique à créer.

7. Entraînement selon l'une des revendications 1 à 6, caractérisé en ce que les parois frontales (22, 23) du boîtier (couvercle de boîtier 12, 13) présentent ou constituent une butée pour le déplacement axial du rotor, et en ce que les deux groupes de conducteurs, de tracé tangentiel au rotor (17), ne comprennent respectivement qu'une unité de réseau b.

8. Entraînement selon l'une des revendications 1 à 7, caractérisé en ce que les dispositions de conducteurs (4, 5) de tracé tangentiel au rotor sont disposées sur les faces frontales (35, 36) des côtés en U (37, 38) d'un dispositif de support d'entoulement (34) en forme de U en coupe en matière susceptible d'être magnétisée.

9. Entraînement selon l'une des revendications 1 à 8, caractérisé en ce qu'une pièce d'entraînement intérieure cylindrique (pièce de bouclage 41) est fermement reliée d'un seul tenant avec un arbre (40) et porte les dispositifs de conducteurs (2, 3, 4, 5), et en ce qu'une deuxième pièce cylindrique (boîtier 39) entourant celle-ci, portant un aimant permanent (43), est logée à rotation sur l'arbre.

10. Entraînement selon la revendication 9, caractérisé en ce que la pièce d'entraînement extérieure (boîtier 39) présente deux disques conducteurs de flux (44, 45 ou 48, 49) enfermant l'aimant permanent (43).

EP 0 221 228 B1

FIG. 1

FIG.2a  FIG.2b

FIG. 3

FIG. 4

FIG.5

FIG.6

FIG.7

FIG. 8

FIG. 9